# EUROPEAN PATENT APPLICATION

(11) **EP 3 450 768 A1**
(43) Date of publication of application: **06.03.2019**
(21) Application number: 18192547.0
(22) Date of filing: 04.09.2018
(51) Int. Cl.: F04D 29/58, F04D 29/66, F04D 25/06, F04D 25/08, F04D 29/44, F04D 29/54, F04D 29/40

(54) **MOTOR MODULE AND VACUUM CLEANER**

(30) Priority: 05.09.2017 JP 2017170182
(71) Applicant: Nidec Corporation, Kyoto-shi, Kyoto 601-8205 (JP)
(72) Inventor: MURAKAMI, Jun, Kyoto, 601-8205 (JP); SAKUMA, Yuuichi, Kyoto, 601-8205 (JP)
(74) Representative: Zimmermann, Tankred Klaus

(57) **Abstract**

A motor module (10) includes a motor (31), a fan (32), and a casing (20) which accommodates the motor (31) and the fan (32) therein. The casing (20) includes a tubular main body portion (21), an intake port (211), an exhaust port (212), a motor disposing unit (44), a flow passage (43), and a partition unit (60). The flow passage (43) includes a fan accommodating unit (41), a first muffling chamber (401) that communicates with the fan accommodating unit (41) via a first communication path (421), and a second muffling chamber (402) that communicates with the first muffling chamber (401) via a second communication path (423). In addition, the partition unit (60) includes a first inner partition unit (533) that partitions the motor disposing unit (44) and the first muffling chamber (401). The first muffling chamber (401) communicates with the motor disposing unit (44) via a cutout portion (530) provided in the first inner partition unit (533).

## Description

### Field of the Invention

The present disclosure relates to a motor module and a vacuum cleaner including a motor module.

### Description of the Related Art

In the related art, a motor and a fan are mounted on a device that requires a suction force of a vacuum cleaner or the like. In recent years, with an increase in number of multi-dwelling houses and the like, suppression of noise caused by an airflow generated by rotation of the fan inside the vacuum cleaner has proceeded.

In the electric vacuum cleaner of the related art, an electric blower cover that covers an electric blower is further covered with a muffler cover on the inside of a main body case. In addition, between the electric blower cover and the muffler cover, two spaces, that is, an intake side space and an exhaust side space, are ensured. Further, the electric blower and the two covers are supported by using an elastic body. Accordingly, it is possible to improve the muffling effect while reducing the size by effectively utilizing the space around the electric blower. However, in the structure of the above-described publication, since a flow passage from an intake port to an exhaust port becomes complicated, there is a concern that the airflow stagnates on the inside of the main body case including the periphery of the electric motor, or backflow is generated. In addition, there is a concern that the number of components increases and the cost increases. Furthermore, there is a concern that an assembling process becomes complicated and the production efficiency decreases.

### SUMMARY OF THE INVENTION

It is an object of the disclosure to provide a structure of a motor module of a vacuum cleaner including a motor and a fan, in which it is possible to reduce noise while suppressing stagnation and backflow of an airflow in a flow passage from an intake port to an exhaust port including the periphery of the motor.

This object is achieved by a motor module according to claim 1.

According to an aspect of the disclosure, there is provided a motor module including: a motor having a rotating unit that rotates around a rotating axis; a fan which is disposed on one side of the motor in an axial direction and rotates together with the rotating unit; and a casing which accommodates the motor and the fan therein, in which the casing includes a tubular main body portion that extends in the axial direction, an intake port disposed on one side of the fan in the axial direction, an exhaust port disposed on the other side of the fan in the axial direction and on an outer side of the motor in a radial direction, a motor disposing unit in which the motor is disposed, a flow passage which is a space that connects the intake port and the exhaust port to each other on an inside of the main body portion, and one or a plurality of partition units which are disposed on an inside of the flow passage and partition the flow passage, in which the flow passage includes a fan accommodating unit in which the fan is accommodated and which directly communicates with the intake port, a first muffling chamber that communicates with the fan accommodating unit via a first communication path, and a second muffling chamber that communicates with the first muffling chamber via a second communication path and directly or indirectly communicates with the exhaust port, in which the partition unit includes a first inner partition unit that partitions the motor disposing unit and the first muffling chamber, in which the first inner partition unit includes a cutout portion provided at at least a part of the first inner partition unit, in which the exhaust port is a through-hole which is positioned in the motor disposing unit and communicates with an outside of the casing, and in which the first muffling chamber communicates with the motor disposing unit via the cutout portion.

According to the aspect of the disclosure, a first expansion type muffler is formed by the first muffling chamber that communicates with the fan accommodating unit via the first communication path on the inside of the motor module. In addition, a second expansion type muffler is formed by the second muffling chamber that communicates with the first muffling chamber via the second communication path. Furthermore, in the first inner partition unit that partitions the motor disposing unit in which the motor is disposed and the first muffling chamber, the cutout portion is provided. The first muffling chamber communicates with the motor disposing unit via the cutout portion. Accordingly, it is possible to reduce noise while suppressing stagnation and backflow of the airflow in the flow passage from the intake port to the exhaust port including the periphery of the motor.

### BRIEF DESCRIPTION OF THE DRAWINGS

Fig. 1 is a side view of a vacuum cleaner according to a first embodiment.
Fig. 2 is a sectional view of a motor module according to the first embodiment.
Fig. 3 is a sectional view of a casing according to the first embodiment.
Fig. 4 is a sectional view of a main body portion of the casing according to the first embodiment.
Fig. 5 is a partial sectional perspective view of the motor module according to the first embodiment.
Fig. 6 is a sectional view taken along line VI-VI of the motor module according to the first embodiment.
Fig. 7 is a partial sectional perspective view of the motor module according to the first embodiment.
Fig. 8 is a view illustrating a result of analyzing a relationship between the presence and absence and a position of a cutout portion in a first inner partition unit according to the first embodiment, and a suction force and aerodynamic power of the vacuum cleaner.
Fig. 9 is a sectional view of a casing according to a modification example.
Fig. 10 is a partial sectional perspective view of the motor module according to the modification example.

### DETAILED DESCRIPTION OF THE PREFERRED EMBODIMENTS

An example of a vacuum cleaner having a motor module is disclosed below. In addition, in the disclosure, a direction parallel to a rotating axis of a motor which will be described later is referred to as "axial direction", a direction orthogonal to the rotating axis of the motor is referred to as "radial direction", and a direction along the circumference around the rotating axis of the motor is referred to as "circumferential direction", respectively. In addition, in the disclosure, the shape and positional relationship of each portion will be described with respect to a rechargeable battery that will be described later considering a handle portion side as an upper side. However, due to the definition of the up-down direction, there is no intention to limit the orientation of the motor module during manufacture and use. Further, in the disclosure, "parallel direction" also includes a substantially parallel direction. Further, in the disclosure, "orthogonal direction" also includes a substantially orthogonal direction.

### 1. First Embodiment

### 1-1. Configuration of Vacuum Cleaner

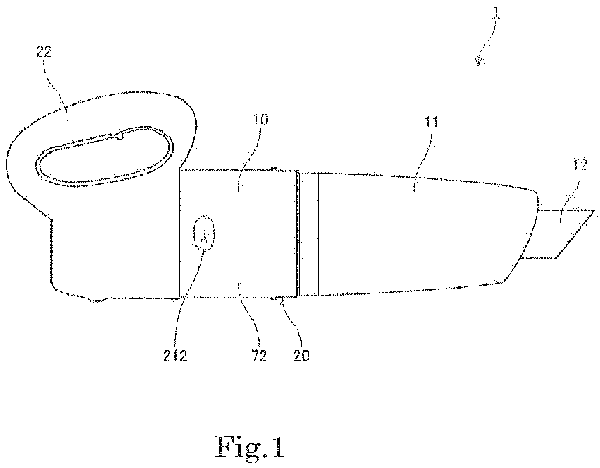

Fig. 1 is a side view of a vacuum cleaner 1 according to a first embodiment. As illustrated in Fig. 1, the vacuum cleaner 1 has a motor module 10, a dust separating unit 11, and a nozzle 12. The vacuum cleaner 1 is a so-called handy type vacuum cleaner.

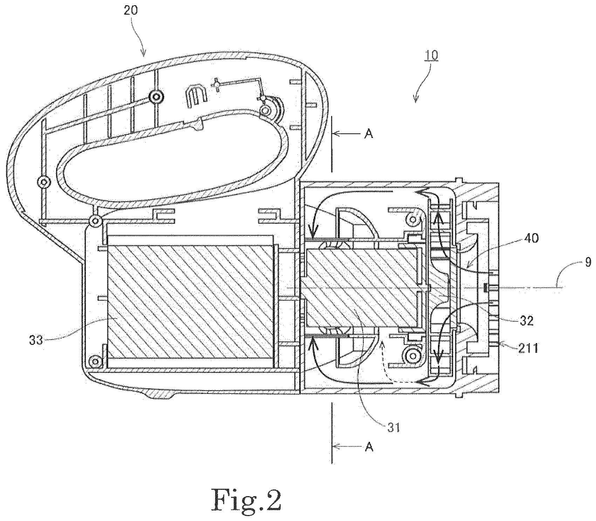

Fig. 2 is a sectional view of the motor module 10. As illustrated in Fig. 2, the motor module 10 includes a casing 20, a motor 31, a fan 32, and a rechargeable battery 33.

The casing 20 accommodates the motor 31, the fan 32, and the rechargeable battery 33 therein, respectively. The casing 20 includes an intake port 211 and an exhaust port 212 which will be described later. The intake port 211 is disposed on one side of the fan 32 in the axial direction and communicates with the dust separating unit 11 and a space inside the casing 20 in which the fan 32 is accommodated. The exhaust port 212 is provided on a side surface of the casing 20. In addition, the casing 20 forms a flow passage 40 which is a space that connects the intake port 211 and the exhaust port 212 to each other on the inside thereof. The detailed configuration of the casing 20 will be described later.

The motor 31 is a brushless motor. The motor 31 has a rotating unit that rotates around a rotating axis 9. The fan 32 is disposed on one side of the motor 31 in the axial direction. Further, the fan 32 rotates together with the rotating unit of the motor 31. The fan 32 is a so-called centrifugal fan that generates an airflow oriented toward the outer side in the radial direction by rotation. Accordingly, the fan 32 generates the airflow that flows from the intake port 211 to the exhaust port 212 in the flow passage 40 of the casing 20. The rechargeable battery 33 supplies driving power to the motor 31.

The dust separating unit 11 is disposed on one side of the motor module 10 in the axial direction. A nozzle 12 is an intake head disposed on one side of the dust separating unit 11 in the axial direction. The dust separating unit 11 separates dust and dirt contained in the airflow suctioned from the nozzle 12, from the airflow. In addition, the dust separating unit 11 may separate dust and dirt by a paper pack or may separate dust and dirt by a cyclone separator.

When the vacuum cleaner 1 is driven, the motor 31 is driven and the fan 32 rotates. In accordance with this, the airflow that is oriented toward the exhaust port 212 through the inside of the dust separating unit 11, the intake port 211, and the inside of the motor module 10, from the nozzle 12, is generated. Accordingly, dust and dirt are suctioned together with the airflow from the nozzle 12. Dust and dirt are removed in the dust separating unit 11 from the airflow that flows in from the nozzle 12. In addition, the airflow from which the dust and dirt have been removed passes through the motor module 10 and is discharged from the exhaust port 212.

### 1-2. Configuration of Casing

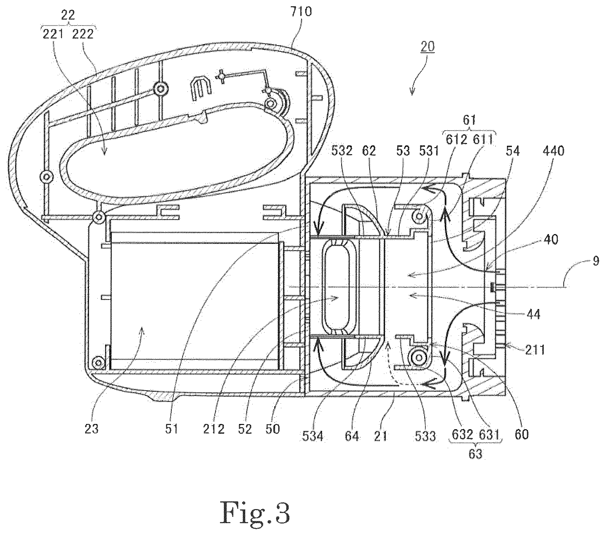

Next, the detailed configuration of the casing 20 will be described later. Hereinafter, Figs. 1 and 2 will be appropriately referred to together with Figs. 3 to 6 which will be described later.

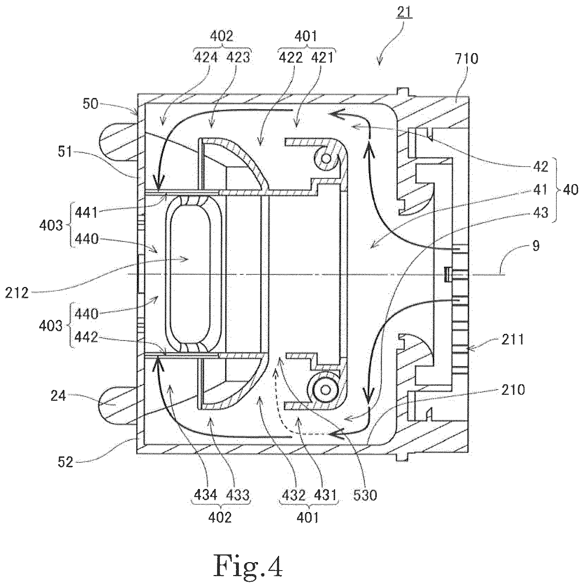

Fig. 3 is a sectional view of the casing 20. Fig. 4 is a sectional view of a main body portion 21 which will be described later and which is a part having the flow passage 40 that connects the intake port 211 and the exhaust port 212 to each other in the casing 20. As illustrated in Fig. 3, the casing 20 includes the main body portion 21, a handle portion 22, and a rechargeable battery accommodating unit 23.

The main body portion 21 is a tubular part that extends in the axial direction. The intake port 211 is provided on one side of the fan 32 in the axial direction in the main body portion 21. In addition, the exhaust port 212 is provided on the other side of the fan 32 in the axial direction and on the outer side of the motor 31 in the radial direction in the main body portion 21. The exhaust port 212 is a through-hole that communicates with the inside and the outside of the casing 20. In addition, in the main body portion 21, the flow passage 40 which is a space that connects the intake port 211 and the exhaust port 212 to each other is formed. In addition, as will be described later, a motor disposing unit 44 in which the motor 31 is disposed is formed on the inside the main body portion 21.

On the other side of the main body portion 21 in the axial direction in the casing 20, the handle portion 22 and the rechargeable battery accommodating unit 23 are provided. The handle portion 22 and the rechargeable battery accommodating unit 23 are connected to the main body portion 21 by, for example, a connecting member 24 illustrated in Fig. 4. Further, the handle portion 22 is disposed above the rechargeable battery accommodating unit 23. Here, the handle portion 22 is configured with a handle hole 221 that penetrates in a left-right direction perpendicular to the axial direction and the up-down direction and a gripping unit 222 that extends in the axial direction above the handle hole 221. The rechargeable battery accommodating unit 23 accommodates the rechargeable battery 33 therein.

Further, the casing 20 includes a wall portion 50 for partitioning the space including the flow passage 40 therein, and a partition unit 60.

The wall portion 50 partitions the internal space of the casing 20 into the flow passage 40 and a part other than the flow passage 40. Accordingly, for example, generation of noise due to the airflow that strikes the parts, such as the handle portion 22, the rechargeable battery accommodating unit 23, and the rechargeable battery 33, is suppressed. Further, regardless of the shapes of the handle portion 22, the rechargeable battery accommodating unit 23, and the rechargeable battery 33, the flow passage resistance in the flow passage 40 and the muffling effect which will be described later can be kept constant. The wall portion 50 is configured with an upper wall portion 51 and a lower wall portion 52. The upper wall portion 51 is a part positioned above the rotating axis 9 in the wall portion 50. The lower wall portion 52 is a part positioned below the rotating axis 9 in the wall portion 50.

The partition unit 60 is a plate-like member which is disposed on the inside of the flow passage 40 and partitions the flow passage 40. The partition unit 60 includes an inner partition unit 53, a central partition unit 54, and outer partition units 61 to 64.

The inner partition unit 53 is a member disposed between at least a part of the motor 31 accommodated on the inside of the casing 20 and the inner wall 210 of the main body portion 21. The inner partition unit 53 extends in a plate-like shape in the axial direction. In addition, the inner partition unit 53 partitions the flow passage 40 such that at least a part of the flow passage 40 forms a shape closed by the inner wall 210 and the inner partition unit 53 of the main body portion 21 when viewed from one side in the axial direction. In addition, the inner partition unit 53 is configured with first inner partition units 531 and 533 and second inner partition units 532 and 534. The first inner partition units 531 and 533 are positioned on one side in the axial direction from the second inner partition units 532 and 534. The first inner partition unit 531 and the second inner partition unit 532 are parts that extend in the axial direction above the rotating axis 9. The first inner partition unit 533 and the second inner partition unit 534 are parts that extend in the axial direction below the rotating axis 9. The detailed configuration of the inner partition unit 53 will be described later.

The central partition unit 54 is a plate-like part that expands in the radial direction between the motor 31 and the fan 32 in the axial direction and on the outer side in the radial direction from the connecting location between the rotating unit of the motor 31 and the fan 32.

The outer partition unit includes first outer partition units 61 and 63 and second outer partition units 62 and 64. The first outer partition unit 61 includes a first outer plate portion 611 and a first outer bent portion 612. The first outer plate portion 611 further expands to the outer side in the radial direction from an end portion on the outer side of the central partition unit 54 in the radial direction. In other words, the first outer plate portion 611 expands substantially perpendicularly to the axial direction on one side of the motor 31 in the axial direction and on the other side of the fan 32 in the axial direction. The first outer bent portion 612 extends from the end portion on the outer side of the first outer plate portion 611 in the radial direction to the other side in the axial direction. The second outer partition unit 62 extends from the end portion on one side of the second inner partition unit 532 in the axial direction to the outer side in the radial direction and the other side in the axial direction, on the other side of the first outer partition unit 61 in the axial direction and on one side of the upper wall portion 51 in the axial direction. The first outer partition unit 63 has a shape obtained by vertically reversing the first outer partition unit 61. The first outer partition unit 63 includes a first outer plate portion 631 and a first outer bent portion 632. The second outer partition unit 64 has a shape obtained by vertically reversing the second outer partition unit 62 considering the rotating axis 9 as a boundary.

As illustrated in Figs. 3 and 4, by providing the wall portion 50, the inner partition unit 53, the central partition unit 54, and the outer partition units 61 to 64 on the inside of the main body portion 21, a fan accommodating unit 41 that accommodates the fan 32 therein, and an upper flow passage 42 and a lower flow passage 43 that extend from the fan accommodating unit 41 to the other side in the axial direction are formed in the flow passage 40. The details of the flow passages will be described below.

First, the fan accommodating unit 41 is positioned on the inside of the casing 20 and on the other side of the intake port 211 in the axial direction, and on one side of the first outer partition units 61 and 63 and the central partition unit 54 in the axial direction. The fan accommodating unit 41 directly communicates with the intake port 211. Further, as described above, the airflow oriented toward the outer side in the radial direction is generated by the rotation of the fan 32 accommodated in the fan accommodating unit 41. The flow passage 40 of the embodiment branches to the upper flow passage 42 and the lower flow passage 43 on the downstream side of the fan 32. As described above, on the inside of the casing 20, the first outer plate portions 611 and 631 and the central partition unit 54 are provided on the other side of the fan accommodating unit 41 in the axial direction. Therefore, the airflow advances further to the other side in the axial direction via an upper first communication path 421 or a lower first communication path 431. In addition, the upper first communication path 421 is a space that communicates in the axial direction between the first outer partition unit 61 and the inner wall 210 of the main body portion 21. The lower first communication path 431 is a space that communicates with the first outer partition unit 63 in the axial direction with the inner wall 210 of the main body portion 21 therebetween.

Next, on the other side of the upper first communication path 421 in the axial direction, an upper first muffling chamber 422 that communicates with the fan accommodating unit 41 via the upper first communication path 421 is formed. In other words, the fan accommodating unit 41 and the upper first muffling chamber 422 are partitioned from each other in the axial direction by the first outer partition unit 61 disposed therebetween. The upper first muffling chamber 422 is a space positioned on the other side of the first outer partition unit 61 in the axial direction and the upper first communication path 421, on the upper side of the first inner partition unit 531, on the inner side of the inner wall 210 of the main body portion 21 in the radial direction, and on one side of the second outer partition unit 62 and an upper second communication path 423 which will be described later in the axial direction. In addition, on the other side of the lower first communication path 431 in the axial direction, a lower first muffling chamber 432 that communicates with the fan accommodating unit 41 via the lower first communication path 431 is formed. The lower first muffling chamber 432 has a shape obtained by vertically reversing the upper first muffling chamber 422 considering the rotating axis 9 as a boundary.

In the upper flow passage 42, the airflow that has reached the upper first muffling chamber 422 via the upper first communication path 421 advances further to the other side in the axial direction via the upper second communication path 423. The upper second communication path 423 is a space that communicates with the second outer partition unit 62 in the axial direction with the inner wall 210 of the main body portion 21 therebetween. Further, in the lower flow passage 43, the airflow that has reached the lower first muffling chamber 432 via the lower first communication path 431 further advances on the other side in the axial direction via the lower second communication path 433. The lower second communication path 433 is a space that communicates with the second outer partition unit 64 in the axial direction with the inner wall 210 of the main body portion 21 therebetween.

An upper second muffling chamber 424 that communicates with the upper first muffling chamber 422 via the upper second communication path 423 is formed on the other side of the upper second communication path 423 in the axial direction. The upper second muffling chamber 424 is a space positioned on the other side of the second outer partition unit 62 in the axial direction and the upper second communication path 423, on the upper side of the second inner partition unit 532, on the inner side of the inner wall 210 of the main body portion 21 in the radial direction, and on one side of the upper wall portion 51 in the axial direction. In addition, a lower second muffling chamber 434 that communicates with the lower first muffling chamber 432 via the lower second communication path 433 is formed on the other side of the lower second communication path 433 in the axial direction. The lower second muffling chamber 434 has a shape obtained by vertically reversing the upper second muffling chamber 424 considering the rotating axis 9 as a boundary. In addition, the upper second muffling chamber 424 and the lower second muffling chamber 434 indirectly communicate with the exhaust port 212 provided in the motor disposing unit 44 (which will be described later), respectively.

Furthermore, on the other side of the fan accommodating unit 41 in the axial direction, a third muffling chamber 440 is formed. The third muffling chamber 440 is a space positioned on the other side of the central partition unit 54 in the axial direction, on the lower side of the first inner partition unit 531 and the second inner partition unit 532, on the upper side of the first inner partition unit 533 and the second inner partition unit 534, and on one side of the wall portion 50 in the axial direction. In addition, the third muffling chamber 440 is the motor disposing unit 44 in which the motor 31 is disposed.

In the embodiment, a through-hole that penetrates at least a part of the second inner partition unit 532 in the radial direction is provided. An upper third communication path 441 that communicates with the upper second muffling chamber 424 and the third muffling chamber 440 is formed by the through-hole. The third muffling chamber 440 communicates with the upper second muffling chamber 424 via the upper third communication path 441. The airflow that has reached the upper second muffling chamber 424 advances to the third muffling chamber 440 via the upper third communication path 441. Further, in the embodiment, a through-hole that penetrates at least a part of the second inner partition unit 534 in the radial direction is provided. A lower third communication path 442 that communicates with the lower second muffling chamber 434 and the third muffling chamber 440 is formed by the through-hole. The third muffling chamber 440 communicates with the lower second muffling chamber 434 via the lower third communication path 442. The airflow that has reached the lower second muffling chamber 434 advances to the third muffling chamber 440 via the lower third communication path 442.

In addition, in the embodiment, the exhaust port 212 described above is provided in the third muffling chamber 440. The third muffling chamber 440 communicates directly with the exhaust port 212. In addition, the third muffling chamber 440 may communicate indirectly with the exhaust port 212 via another space. The airflow that has reached the third muffling chamber 440 via the upper third communication path 441 in the upper flow passage 42 and the airflow that has reached the third muffling chamber 440 via the lower third communication path 442 in the lower flow passage 43 merge with each other and are discharged to the outside of the motor module 10 via the exhaust port 212.

As described above, when the motor 31 is driven to rotate the fan 32, the fan 32 generates the airflow oriented from the upper part of the fan 32 toward the outer side of the fan 32 in the radial direction. Accordingly, on the inside of the fan accommodating unit 41, the airflow oriented from the intake port 211 toward the upper flow passage 42 and the lower flow passage 43 via the first communication paths 421 and 431 is generated. In addition, the airflow is discharged from the exhaust port 212 to the outside of the motor module 10 through the first muffling chambers 422 and 432, the second communication paths 423 and 433, the second muffling chambers 424 and 434, the third communication path 441 and 442, and the third muffling chamber 440.

Here, the flow passage sectional area of the upper first muffling chamber 422 is greater than the flow passage sectional area of the upper first communication path 421. The flow passage sectional area of the lower first muffling chamber 432 is greater than the flow passage sectional area of the lower first communication path 431. Accordingly, the upper first communication path 421 and the upper first muffling chamber 422, and the lower first communication path 431 and the lower first muffling chamber 432 configure a first expansion type muffler 401, respectively. In addition, the flow passage sectional area of the upper second muffling chamber 424 is greater than the flow passage sectional area of the upper second communication path 423. The flow passage sectional area of the lower second muffling chamber 434 is greater than the flow passage sectional area of the lower second communication path 433. Accordingly, the upper second communication path 423 and the upper second muffling chamber 424, and the lower second communication path 433 and the lower second muffling chamber 434 configure a second expansion type muffler 402, respectively. Furthermore, the flow passage sectional area of the third muffling chamber 440 is greater than the flow passage sectional area of the upper third communication path 441. The flow passage sectional area of the third muffling chamber 440 is greater than the flow passage sectional area of the lower third communication path 442. Accordingly, the upper third communication path 441 and the third muffling chamber 440, and the lower third communication path 442 and the third muffling chamber 440 configure a third expansion type muffler 403, respectively. In this manner, by disposing three expansion type mufflers 401, 402, and 403 between the fan 32 and the exhaust port 212 respectively in the upper flow passage 42 and the lower flow passage 43, the noise generated in the fan 32 can be substantially reduced. In addition, since the expansion type mufflers can be configured with a simple structure by utilizing the disposition space of the motor 31, it is possible to reduce the number of components and cost while efficiently reducing the noise. In addition, assembly workability can be improved, and production efficiency can be enhanced.

Further, by forming the third muffling chamber 440 by the motor disposing unit 44 in which the motor 31 is disposed, it is possible to effectively utilize the limited space on the inside of the motor module 10 and to suppress the increase in size of the motor module 10. Furthermore, since the airflow is generated in the vicinity of the motor 31, an effect of cooling the heat generated in the motor 31 can be obtained.

In addition, the upper first communication path 421 and the upper second communication path 423 are disposed along the inner wall 210 of the main body portion 21, respectively, and at least a part thereof overlaps each other in the axial direction. In addition, the lower first communication path 431 and the lower second communication path 433 are disposed along the inner wall 210 of the main body portion 21, respectively, and at least a part thereof overlaps each other in the axial direction. Accordingly, the airflow oriented toward the other side of the main body portion 21 in the axial direction along the inner wall 210 generated by the fan 32 is likely to enter the first communication paths 421 and 431 and the second communication paths 423 and 433. In other words, the flow passage resistance in the upper flow passage 42 and the flow passage resistance in the lower flow passage 43 decrease. Therefore, the air blowing efficiency of the motor module 10 as a whole can be improved.

Furthermore, in the embodiment, the upper first communication path 421, the upper second communication path 423, the lower first communication path 431, and the lower second communication path 433 respectively have a crescent shape when the entrance is viewed from one side in the axial direction. In other words, when viewed from one side in the axial direction, each has a shape closed by one straight line (each of the outer partition units 61 to 64) and one circular arc (inner wall 210 of the main body portion 21). Accordingly, the airflow can further advance to the other side in the axial direction via the communication paths while maintaining the turning in the circumferential direction of the airflow generated by the rotation of the fan 32. As a result, air stagnation on the inside of the casing 20 can be suppressed and the air can be exhausted efficiently.

In addition, since a part of the upper first communication path 421 extends toward the inside of the upper first muffling chamber 422, the first expansion type muffler 401 becomes a muffler with an inner duct. Specifically, a space below the first outer bent portion 612 and above the first inner partition unit 531 plays a role of the inner duct. Therefore, the space functions as a side branch type muffler (that is, an interference type and resonance type muffler). Therefore, the muffling effect of the first expansion type muffler 401 can be finely adjusted depending on the length of the inner duct, and the muffling performance can be further improved. In addition, since a part of the lower first communication path 431 extends toward the inside of the lower first muffling chamber 432, the first expansion type muffler 401 becomes a muffler with an inner duct. Specifically, a space above the first outer bent portion 632 and below the first inner partition unit 533 plays a role of the inner duct. Therefore, the space functions as a side branch type muffler (that is, an interference type and resonance type muffler). Therefore, the muffling effect of the first expansion type muffler 401 can be finely adjusted depending on the length of the inner duct, and the muffling performance can be further improved.

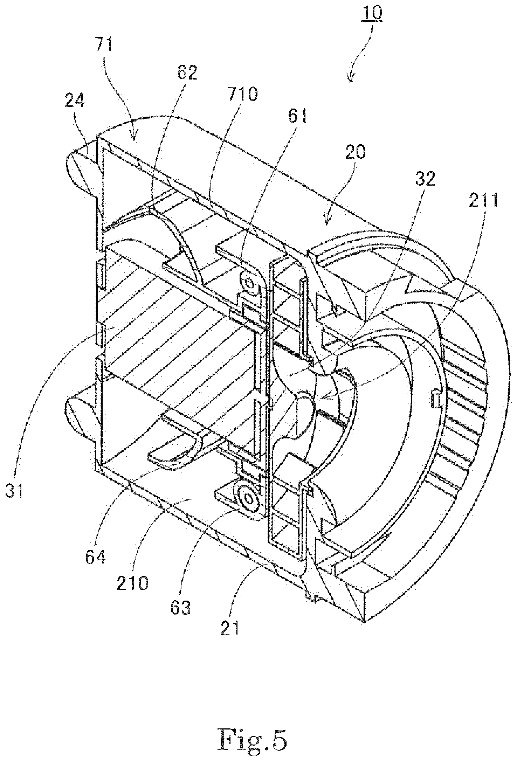

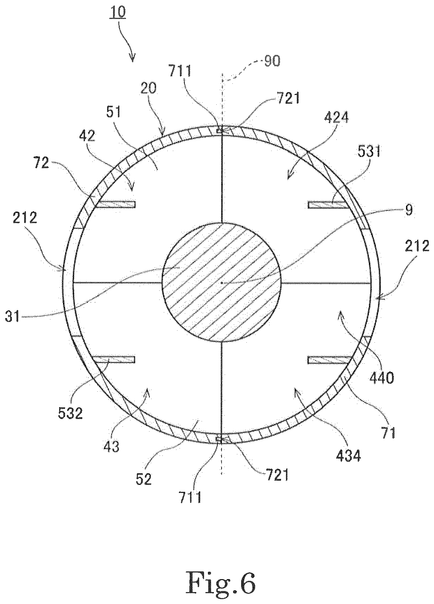

Fig. 5 is a partial sectional perspective view of a part having a flow passage 40 that connects the intake port 211 and the exhaust port 212 to each other in the motor module 10. Fig. 6 is a sectional view taken along line VI-VI of the motor module 10 in Fig. 2. As illustrated in Figs. 5 and 6, the casing 20 of the embodiment is configured with a first casing 71 and a second casing 72 which are two members obtained by dividing the casing 20 by half. The first casing 71 and the second casing 72 are resin molded articles integrally formed respectively. The first casing 71 has a contact surface 710 that comes into contact with the second casing 72 on a plane 90 through the rotating axis 9. Further, the second casing 72 has a contact surface (not illustrated) that comes into contact with the first casing 71 on the plane 90. The casing 20 is configured to have a substantially symmetrical shape with respect to the plane 90. Therefore, the handle portion 22 is also substantially symmetrical with respect to the plane 90.

In this manner, by configuring the casing 20 with two members that divide the casing 20 by half, the assembly efficiency of each component can be improved in a manufacturing process of the motor module 10. In addition, in the first casing 71 and the second casing 72 divided by half, most parts including the wall portion 50 and the central partition unit 54 are formed perpendicularly to the plane 90 and have a substantially symmetrical shape with respect to the plane 90. Accordingly, when forming the first casing 71 and the second casing 72 by injection molding, the number of components of molding can be reduced. Therefore, the manufacturing cost can be reduced. In addition, the first inner partition units 531 and 533, the second inner partition units 532 and 534, and each of the outer partition units 61 to 64 may be respectively configured with members formed separately from the first casing 71 and the second casing 72. Furthermore, after separately forming the first inner partition units 531 and 533, the second inner partition units 532 and 534, and each of the outer partition units 61 and 64, the first inner partition units 531 and 533, the second inner partition units 532 and 534, and each of the outer partition units 61 to 64 may be disposed so as to protrude to the inside from the inner wall 210 of each of the main body portions 21 and so as to expand perpendicularly to the plane 90.

The first casing 71 has a first projection portion 711 that protrudes from the plane 90 toward the second casing 72 side. The second casing 72 has a first recess portion 721 recessed from the plane 90. The first projection portion 711 is fitted into the first recess portion 721. Accordingly, the first casing 71 and the second casing 72 are stably fixed. The first projection portion 711 and the first recess portion 721 are respectively disposed in the vicinity of the outer surface of the casing 20 and around the handle hole 221.

Further, the first casing 71 has screw fixing holes (not illustrated) formed perpendicularly to the plane 90. The second casing 72 has screw holding holes (not illustrated) formed perpendicularly to the plane 90. A screw thread part of a screw that penetrates the screw holding hole (not illustrated) is screwed to a screw fixing hole (not illustrated). Accordingly, the first casing 71 and the second casing 72 are more stably fixed. 1-3. Configuration of Inner Partition Unit

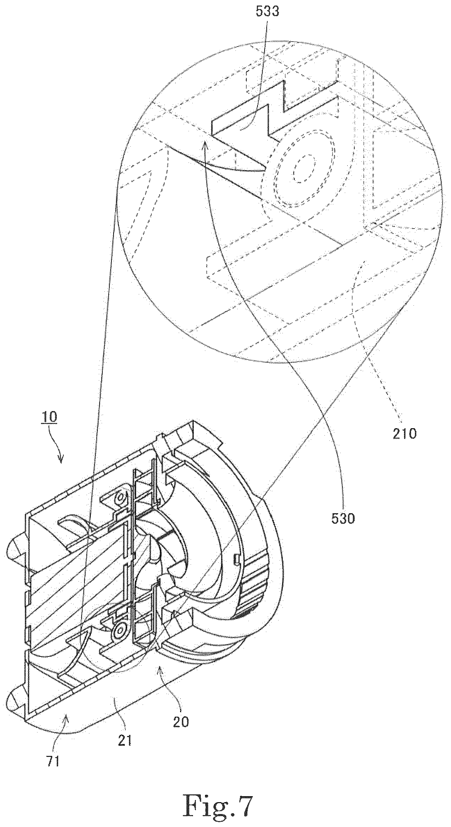

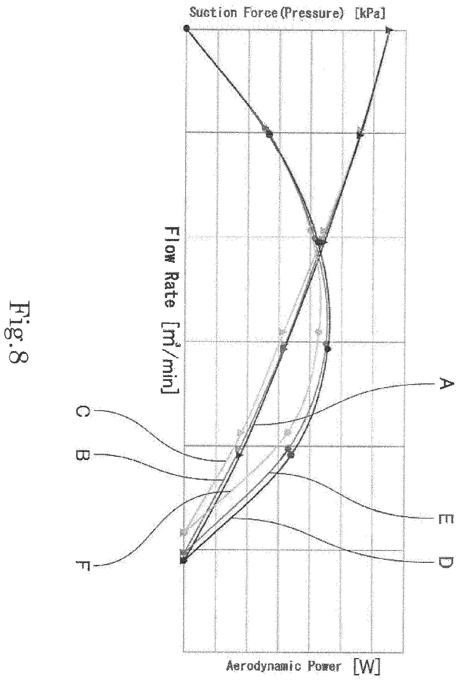

Next, the detailed configuration of the inner partition unit 53 will be described. Hereinafter, Figs. 1 to 6 will be appropriately referred to together with Figs. 7 and 8 which will be described later.

Fig. 7 is a partial sectional perspective view of a part having the flow passage 40 that connects the intake port 211 and the exhaust port 212 to each other in the motor module 10. In addition, in Fig. 7, a part of the motor module 10 including the first inner partition unit 533 is enlarged and displayed. As illustrated in Fig. 7, the first casing 71 has a cutout portion 530 at at least a part of the first inner partition unit 533 that partitions the motor disposing unit 44 and the lower first muffling chamber 432. In addition, although not illustrated, the second casing 72 also has the cutout portion 530 at at least a part of the first inner partition unit 531 that partitions the motor disposing unit 44 and the upper first muffling chamber 422.

The upper first muffling chamber 422 and the lower first muffling chamber 432 communicate with the motor disposing unit 44 via the cutout portion 530, respectively. In addition, the airflow that has reached the upper first muffling chamber 422 advances to the upper second muffling chamber 424 via the upper second communication path 423 as described above, and in addition to this, a part thereof advances to the motor disposing unit 44 via the cutout portion 530. In addition, the airflow that has reached the lower first muffling chamber 432 advances to the lower second muffling chamber 434 via the lower second communication path 433 as described above, and in addition to this, a part thereof advances to the motor disposing unit 44 via the cutout portion 530. The airflow that has reached the motor disposing unit 44 via the cutout portion 530 in the upper flow passage 42 and the lower flow passage 43 passes through a gap between the motor disposing unit 44 and the motor 31 and is discharged to the outside of the motor module 10 via the exhaust port 212. In this manner, by having the flow passage from the cutout portion 530 to the exhaust port 212 in the motor disposing unit 44, stagnation of the airflow is suppressed in the gap between the motor disposing unit 44 and the motor 31. In addition, the airflow is more likely to be discharged via the exhaust port 212, and the pressure in the vicinity of the motor 31 is suppressed from becoming higher than the pressure of the upper first muffling chamber 422 and the lower first muffling chamber 432. In addition, a pressure difference between the upper first muffling chamber 422 and the lower first muffling chamber 432 and the motor disposing unit 44 becomes constant. Furthermore, a constant pressure gradient is formed in the flow passage from the intake port 211 to the exhaust port 212 including the periphery of the motor 31 on the inside of the motor module 10. As a result, it is possible to suppress backflow of airflow.

In addition, the flow passage sectional area of the third muffling chamber 440 formed in the motor disposing unit 44 is greater than the flow passage sectional area of each of the cutout portions 530. Accordingly, the cutout portion 530 and the third muffling chamber 440 configure a fourth expansion type muffler 404. As a result, the muffling effect in the motor module 10 can be further obtained.

Furthermore, as described above, the first inner partition units 531 and 533 respectively have a part positioned on the first casing 71 side and a part positioned on the second casing 72 side. In addition, the cutout portion 530 is provided at a part positioned on the downstream side in a turning direction of the airflow generated by the rotation of the fan 32 among the parts positioned on the first casing 71 side and the parts positioned on the second casing 72 side, in each of the first inner partition units 531 and 533. In other words, the first inner partition units 531 and 533 have a first region having the cutout portion 530 on the first casing 71 side and a second region having no cutout portion 530 on the second casing 72 side considering the plane 90 as a boundary. Accordingly, the airflow can advance the further to the motor disposing unit 44 via the cutout portion 530 while maintaining the turning in the circumferential direction of the airflow generated by the rotation of the fan 32. As a result, air stagnation on the inside of the casing 20 can be further suppressed and the air can be exhausted efficiently.

Fig. 8 is a view illustrating a result of analyzing the relationship between the presence and absence and position of the cutout portion 530 in the first inner partition units 531 and 533 and the suction force (pressure) and aerodynamic power (workload) of the vacuum cleaner 1 having the motor module 10 of the embodiment. In addition, the left vertical axis in Fig. 8 represents the analysis result of the suction force of the vacuum cleaner 1. The right vertical axis represents the analysis result of the aerodynamic power of vacuum cleaner 1. The horizontal axis in Fig. 8 represents a flow rate of the airflow generated by the rotation of the fan 32. In addition, A in Fig. 8 is a result of analyzing the suction force of the vacuum cleaner 1 in a case where the cutout portion 530 is provided only at a part positioned on the downstream side in a turning direction of the airflow generated by the rotation of the fan 32 among the parts positioned on the first casing 71 side and the parts positioned on the second casing 72 side, in each of the first inner partition units 531 and 533. In other words, in A, the cutout portion 530 is provided at the same position as that of the embodiment. In addition, B is a result of analyzing the suction force of the vacuum cleaner 1 in a case where the cutout portion 530 is provided both at a part positioned on the first casing 71 side and the part positioned on the second casing 72 side, in each of the first inner partition units 531 and 533. In other words, in B, the cutout portion 530 is provided at a part positioned on the upstream side and at a part positioned on the downstream side of the airflow generated by the rotation of the fan 32 in the turning direction. C is a result of analyzing the suction force of the vacuum cleaner 1 in a case where the cutout portion 530 is not provided in the first inner partition units 531 and 533. In addition, D in Fig. 8 is a result of analyzing the aerodynamic power of the vacuum cleaner 1 in a case where the cutout portion 530 is provided only at a part positioned on the downstream side of the airflow generated by the rotation of the fan 32 in the turning direction among the parts positioned on the first casing 71 side and the parts positioned on the second casing 72 side, in each of the first inner partition units 531 and 533. In other words, in D, the cutout portion 530 is provided at the same position as that of the embodiment. In addition, E is a result of analyzing the aerodynamic power of the vacuum cleaner 1 in a case where the cutout portion 530 is provided both at a part positioned on the first casing 71 side and the part positioned on the second casing 72 side, in each of the first inner partition units 531 and 533. In other words, in E, the cutout portion 530 is provided at a part positioned on the upstream side and at a part positioned on the downstream side of the airflow generated by the rotation of the fan 32 in the turning direction. F is a result of analyzing the aerodynamic power of the vacuum cleaner 1 in a case where the cutout portion 530 is not provided in the first inner partition units 531 and 533.

First, the analysis results of A to C are compared to each other. As illustrated in Fig. 8, in a case where the flow rate generated by the rotation of the fan 32 is the same, the suction force of the vacuum cleaner 1 is higher in the order of A, B, and C. In addition, similarly, when comparing the analysis results of D to F to each other, the aerodynamic power of vacuum cleaner 1 is higher in the order of D, E, and F at the same flow rate. As described above, in A and D, the airflow can further advance to the motor disposing unit 44 via the cutout portion 530 while maintaining the turning in the circumferential direction of the airflow generated by the rotation of the fan 32. Accordingly, air stagnation and backflow on the inside of the casing 20 can be suppressed and the air can be exhausted efficiently. As a result, the flow rate exhausted from the exhaust port 212 via the inside of the dust separating unit 11, the intake port 211, and the inside of the motor module 10, from the nozzle 12 becomes the maximum. In addition, the suction force of the vacuum cleaner 1, the aerodynamic power, and the amount of dust or dirt suctioned together with the airflow from the nozzle 12 are maximized.

In addition, in B in Fig. 8, the suction force of the vacuum cleaner 1 is higher than that of C. In addition, in E, the aerodynamic power of vacuum cleaner 1 is higher than that of F. Similar to B and E, in a case where the cutout portion 530 is provided both at the part positioned on the first casing 71 side and at the part positioned on the second casing 72 side in each of the first inner partition units 531 and 533, compared to a case where the cutout portion 530 is not provided, a part of the airflow can advance to the motor disposing unit 44 via the cutout portion 530 while further maintaining turning in the circumferential direction of the airflow generated by the rotation of the fan 32. In other words, similar to C and F, in a case where the cutout portion 530 is not provided, the end portion on one side in the axial direction in the motor disposing unit 44 is closed, and air stagnation and backflow are likely to be generated. In B and E, compared to C and F, air stagnation and backflow on the inside of the casing 20 can be suppressed and the air can be exhausted efficiently. As a result, the flow rate discharged from the exhaust port 212 via the inside of the dust separating unit 11, the intake port 211, and the inside of the motor module 10, from the nozzle 12 increases. In addition, it is possible to obtain a higher suction force and higher aerodynamic power of vacuum cleaner 1. In addition, the amount of dust and dirt suctioned together with the airflow from the nozzle 12 increases.

The description returns to Fig. 7. The cutout portion 530 is positioned on the other side in the axial direction from the center position in the axial direction in each of the first inner partition units 531 and 533. Accordingly, the airflow can advance more smoothly further to the motor disposing unit 44 via the cutout portion 530 while maintaining the turning in the circumferential direction of the airflow generated by the rotation of the fan 32. As a result, air stagnation on the inside of the casing 20 can be further suppressed and the air can be exhausted efficiently.

Further, as illustrated in Fig. 7, the length of the cutout portion 530 in the axial direction increases as being separated from the inner wall 210 of the main body portion 21. Accordingly, the airflow can advance more smoothly to the motor disposing unit 44 via the cutout portion 530 while maintaining the turning in the circumferential direction of the airflow generated by the rotation of the fan 32. As a result, air stagnation on the inside of the casing 20 can be further suppressed and the air can be exhausted efficiently. In addition, it is possible to suppress the strength in the vicinity of the connecting location between the inner wall 210 of the main body portion 21 and the first inner partition units 531 and 533 from decreasing due to the cutout portion 530.

In addition, the shape of the cutout portion 530 is not limited to the shape illustrated in Fig. 7. For example, the shape of the cutout portion 530, when viewed in a direction perpendicular to the first inner partition units 531 and 533, may be a U shape. Accordingly, the cutout portion 530 can be easily processed and formed in the first inner partition units 531 and 533.

In addition, the end portion on the other side of the cutout portion 530 in the axial direction is positioned on the other side in the axial direction from the end portion on the other side of the first outer bent portion 612 of the first outer partition unit 61 in the axial direction and the end portion on the other side of the first outer bent portion 632 of the first outer partition unit 63 in the axial direction. Accordingly, it is possible to further suppress the backflow of the airflow from the motor disposing unit 44 to the upper first muffling chamber 422 and the lower first muffling chamber 432 via the cutout portion 530.

Furthermore, the cutout portion 530 of the embodiment is positioned on the inner side from the connecting location between the first inner partition units 531 and 533 and the inner wall 210 of the main body portion 21. As described above, the first inner partition units 531 and 533 protrude to the inside from the inner wall 210 of the main body portion 21. In the cutout portion 530, a root part of the first inner partition units 531 and 533 is not cut out. In this manner, by leaving a wall between the cutout portion 530 and the inner wall 210 of the main body portion 21, the rigidity of the main body portion 21 can be maintained.

### 2. Modification Example

Above, although the embodiments of the invention have been described as examples, the invention is not limited to the above-described embodiments.

In the above-described embodiment, in total two exhaust ports 212 are provided in the third muffling chamber 440 one by one so as to penetrate the first casing 71 and the second casing 72 that configures the casing 20, respectively. However, the exhaust port 212 may be provided so as to penetrate either one of the first casing 71 or the second casing 72, that is, only one exhaust port may be provided or three or more exhaust ports may be provided.

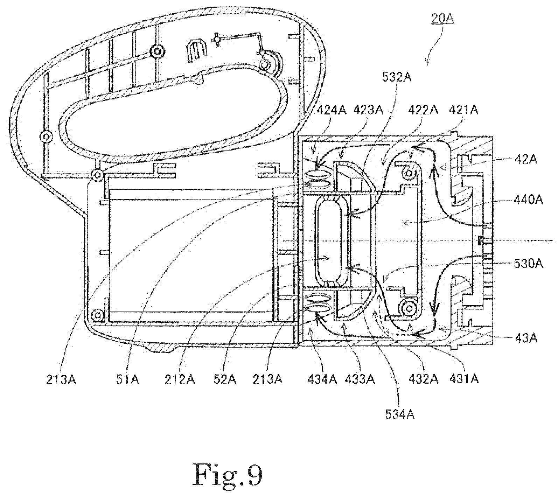

Fig. 9 is a sectional view of a casing 20A according to a modification example. In the casing 20A illustrated in Fig. 9, an exhaust port 212A is provided in a third muffling chamber 440A. In addition, in an upper second muffling chamber 424A and a lower second muffling chamber 434A, exhaust ports 213A are provided, respectively. The exhaust port 212A and the exhaust port 213A are through-holes that communicate with the inside and the outside of the casing 20A, respectively. In addition, the third muffling chamber 440A communicates directly with the exhaust port 212A, and the upper second muffling chamber 424A and the lower second muffling chamber 434A respectively communicates directly with the exhaust port 213A. In addition, in the modification example, the exhaust ports 213A are respectively provided two by two in the upper second muffling chamber 424A and the lower second muffling chamber 434A. However, the number of exhaust ports 213A is not limited thereto. In addition, in the modification example, through-holes are not provided in second inner partition units 532A and 534A. Accordingly, the upper second muffling chamber 424A and the lower second muffling chamber 434A are completely partitioned from the third muffling chamber 440A, respectively.

As described above, the third muffling chamber 440A of the modification example communicates with the upper first muffling chamber 422A via a cutout portion 530A, and does not communicate with the upper second muffling chamber 424A. The third muffling chamber 440A communicates with a lower first muffling chamber 432A via the cutout portion 530A, and does not communicate with the lower second muffling chamber 434A. In addition, the upper second muffling chamber 424A communicates with the upper first muffling chamber 422A via an upper second communication path 423A. In addition, the lower second muffling chamber 434A communicates with the lower first muffling chamber 432A via a lower second communication path 433A. Accordingly, a part of the airflow generated by the rotation of the fan (not illustrated) is discharged from the exhaust port 213A to the outside of the motor module passing through the upper first muffling chamber 422A, the upper second communication path 423A, and the upper second muffling chamber 424A in the upper flow passage 42A, or is discharged from the exhaust port 212A to the outside of the motor module passing through the upper first muffling chamber 422A, the cutout portion 530A, and the third muffling chamber 440A. In addition, another part of the airflow generated by the rotation of the fan (not illustrated) is discharged from the exhaust port 213A to the outside of the motor module passing through the lower first muffling chamber 432A, the lower second communication path 433A, and the lower second muffling chamber 434A in the lower flow passage 43A, or is discharged from the exhaust port 212A to the outside of the motor module passing through the lower first muffling chamber 432A, the cutout portion 530A, and the third muffling chamber 440A.

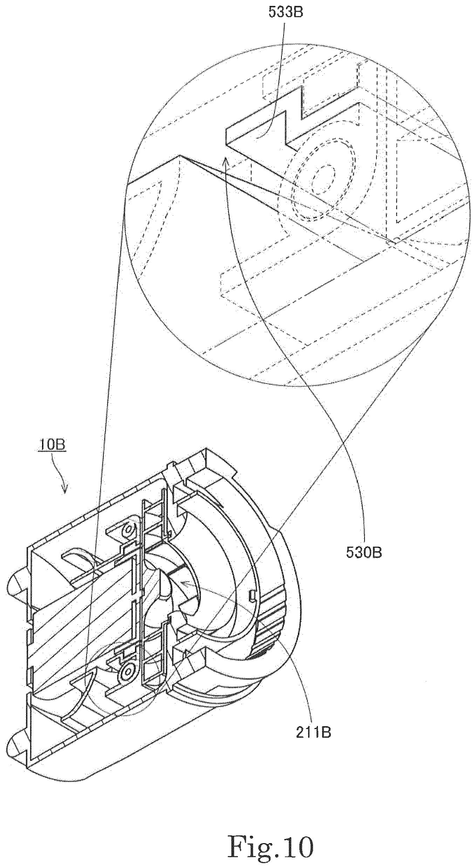

Fig. 10 is a partial sectional perspective view of a part having the flow passage that connects an intake port 211B and the exhaust port to each other in a motor module 10B according to another modification example. In addition, in Fig. 10, a part of the motor module 10B including a first inner partition unit 533B is enlarged and displayed. As illustrated in Fig. 10, the shape of a cutout portion 530B, when viewed in a direction perpendicular to the first inner partition unit 533B, may be a shape of a triangle. Accordingly, the cutout portion 530B can be easily processed and formed in the first inner partition unit 533B.

In the embodiments and the modification examples described above, the fan is a centrifugal fan, but the invention is not limited thereto. For example, the fan used in the motor module and the vacuum cleaner of the invention may be a mixed flow fan.

In the embodiments and the modification examples described above, on the downstream side of the fan, the flow passage is first branched into two, but the invention is not limited thereto. On the downstream side of the fan, there may be one flow passage. In this case, the flow passage may be an annular flow passage connected in the circumferential direction on the outer side of the motor. In addition, on the downstream side of the fan, the flow passage may be branched into three or more.

In the embodiments and modification examples described above, the partition unit has in total four inner partition units, one central partition unit, and four outer partition units in the upper flow passage and the lower flow passage. However, the number of partition units is not limited thereto. The number of partition units may be one, and may be any number of two or more.

In the embodiments and the modification examples described above, the upper first communication path and the upper second communication path are disposed along the inner wall of the main body portion, respectively. In addition, the lower first communication path and the lower second communication path are disposed along the inner wall of the main body portion, respectively. However, for example, the upper second communication path and the lower second communication path may be disposed along the inner partition unit. In other words, the second outer partition unit may extend from the part of the inner wall of the main body portion to the inner side in the radial direction and to the other side in the axial direction, on the other side of the first outer partition unit in the axial direction and on one side of the wall portion in the axial direction. Accordingly, the upper first communication path and the upper second communication path are disposed at different positions when viewed in the axial direction. In addition, the lower first communication path and the lower second communication path are disposed at different positions when viewed in the axial direction. In this manner, by shifting the positions in the axial direction of the first communication path and the second communication path in the upper flow passage and the lower flow passage, respectively, the muffling effect of the first expansion type muffler configured with the first communication path and the first muffling chamber can be improved. In other words, the design of the motor module as a whole emphasizes the muffling effect.

In the embodiments and modification examples described above, the first outer partition unit has the first outer plate portion and the first outer bent portion. However, the first outer partition unit may have only the first outer plate portion.

The vacuum cleaner of the above-described embodiment is a handy type vacuum cleaner, but the invention is not limited thereto. Similar to the handy type, the motor module of the invention is mounted on an upright type or a stick type vacuum cleaner which suctions gas to the intake port via the intake head and the dust separating unit and discharges the gas from the exhaust port.

Further, the motor module of the invention may be mounted on a so-called canister type vacuum cleaner. In addition to the intake head and the dust separating unit, the canister type vacuum cleaner has a hose portion that connects the intake head and the dust separating unit to each other. The motor module suctions the gas to the intake port via the intake head, the hose portion, and the dust separating unit and discharges the gas from the exhaust port.

Further, the shape of the details of each member may be different from the shape illustrated in each of the drawings of the application. For example, the shapes of each portion of the intake port, the exhaust port, and the partition unit may be different from those of the embodiments and modification examples described above. Further, each of the above-described elements may be appropriately combined within a range in which inconsistency does not occur.

### Industrial Applicability

The invention can be applied to a motor module and a vacuum cleaner. Features of the above-described preferred embodiments and the modifications thereof may be combined appropriately as long as no conflict arises. While preferred embodiments of the present disclosure have been described above, it is to be understood that variations and modifications will be apparent to those skilled in the art without departing from the scope of the present disclosure. The scope of the present disclosure, therefore, is to be determined solely by the following claims.

## Claims

1. A motor module (10, 10B) comprising:
a motor (31) having a rotating unit configured to rotate around a rotating axis (9);
a fan (32) which is disposed on one side of the motor (31) in an axial direction and configured to rotate together with the rotating unit; and
a casing (20, 20A) which accommodates the motor (31) and the fan (32) therein,
wherein the casing (20, 20A) includes
a tubular main body portion (21) that extends in the axial direction,
an intake port (211) disposed on one side of the fan (32) in the axial direction,
an exhaust port (212, 212A) disposed on the other side of the fan (32) in the axial direction and on an outer side of the motor (31) in a radial direction,
a motor disposing unit (44) in which the motor (31) is disposed,
a flow passage (43, 43A) which is a space that connects the intake port (211) and the exhaust port (212, 212A) to each other on an inside of the main body portion (21), and
one or a plurality of partition units (60) which are disposed on an inside of the flow passage (43, 43A) and partition the flow passage (43, 43A),
wherein the flow passage (43, 43A) includes
a fan accommodating unit (41) in which the fan (32) is accommodated and which directly communicates with the intake port (211),
a first muffling chamber (401) that communicates with the fan accommodating unit (41) via a first communication path (421, 421A), and
a second muffling chamber (402) that communicates with the first muffling chamber (401) via a second communication path (423, 423A) and directly or indirectly communicates with the exhaust port (212, 212A),
wherein the partition unit (60) includes a first inner partition unit (533, 533B) that partitions the motor disposing unit (44) and the first muffling chamber (401),
wherein the first inner partition unit (533, 533B) includes a cutout portion (530, 530B) provided at at least a part of the first inner partition unit (533, 533B),
wherein the exhaust port (212, 212A) is a through-hole which is positioned in the motor disposing unit (44) and communicates with an outside of the casing (20, 20A), and
wherein the first muffling chamber (401) communicates with the motor disposing unit (44) via the cutout portion (530, 530B).

2. The motor module (10, 10B) according to claim 1,
wherein the cutout portion (530, 530B) is positioned on the other side in the axial direction from a center position in the axial direction in the first inner partition unit (533, 533B).

3. The motor module (10, 10B) according to claim 1 or 2,
wherein the first inner partition unit (533, 533B) protrudes from an inner wall (210) of the main body portion (21) to the inside, and
wherein the cutout portion (530, 530B) is positioned on the inner side from a connecting location between the first inner partition unit (533, 533B) and the inner wall (210) of the main body portion (21) on the inside of the main body portion (21).

4. The motor module (10, 10B) according to claim 1 or 2,
wherein the first inner partition unit (533, 533B) protrudes from an inner wall (210) of the main body portion (21) to the inside, and
wherein a length of the cutout portion (530, 530B) in the axial direction increases as being separated from the inner wall (210) of main body portion (21).

5. The motor module (10, 10B) according to claim 1 or 2,
wherein the first inner partition unit (533, 533B) protrudes from an inner wall (210) of the main body portion (21) to the inside, and
wherein the shape of the cutout portion (530, 530B), when viewed in a direction perpendicular to the first inner partition unit (533, 533B), is U shape.

6. The motor module (10, 10B) according to any one of claims 1 to 5,
wherein the motor disposing unit (44) forms a third muffling chamber (403) that communicates with the first muffling chamber (401) via the cutout portion (530, 530B) and directly communicates with the exhaust port (212, 212A).

7. The motor module (10, 10B) according to any one of claims 1 to 6,
wherein the partition unit (60) includes a plate-like first outer partition unit (61, 63) disposed between the fan accommodating unit (41) and the first muffling chamber (401),
wherein the first outer partition unit (61, 63) further includes
a first plate portion (611, 631) that expands substantially perpendicularly to the axial direction, and
a first bent portion (612, 632) that extends from the first plate portion (611, 631) to the other side in the axial direction, and
wherein an end portion on the other side of the cutout portion (530, 530B) in the axial direction is positioned on the other side in the axial direction from an end portion on the other side of the first bent portion (612, 632) in the axial direction.

8. The motor module (10, 10B) according to any one of claims 1 to 7,
wherein the first communication path (421, 421A) and the second communication path (423, 423A) are disposed along an inner wall (210) of the main body portion (21), and
wherein the first communication path (421, 421A) and the second communication path (423, 423A) overlap each other in the axial direction, at at least a part.

9. The motor module (10, 10B) according to any one of claims 1 to 8,
wherein the second muffling chamber (402) communicates with the motor disposing unit (44) via a third communication path (442).

10. The motor module (10, 10B) according to any one of claims 1 to 9,
wherein the shape of the first communication path (421, 421A) viewed from one side in the axial direction is a shape closed by one straight line and one circular arc.

11. The motor module (10, 10B) according to any one of claims 1 to 10,
wherein the casing (20, 20A) includes
a first casing (71) formed integrally, and
a second casing (72) formed integrally, and
wherein the first casing (71) and the second casing (72) have contact surfaces that come into contact with each other on a plane that passes through the rotating axis (9).

12. The motor module (10, 10B) according to claim 11,
wherein the first inner partition unit (533, 533B) expands perpendicularly to the plane and, considering the plane as a boundary, includes
a first region having the cutout portion (530, 530B), and
a second region that does not have the cutout portion.

13. The motor module (10, 10B) according to claim 11 or 12,
wherein the first casing (71) has a projection portion (711) that protrudes from the plane to the second casing side,
wherein the second casing (72) has a recess portion (721) recessed from the plane, and
wherein the projection portion (711) is fitted into the recess portion (721).

14. A handy type, upright type, or stick type vacuum cleaner comprising:
an intake head (12);
a dust separating unit (11) configured to separate dust contained in an airflow from the airflow; and
the motor module (10, 10B) according to any one of claims 11 to 13,
wherein the casing (20, 20A) includes a handle (22) having a substantially symmetrical shape with respect to the plane, and
wherein the motor module (10, 10B) is configured to suck gas to the intake port (211) via the intake head (12) and the dust separating unit (11) and to discharge the gas from the exhaust port (212, 212A).

15. A canister type vacuum cleaner comprising:
an intake head (12);
a dust separating unit (11) configured to separate dust contained in the airflow from the airflow;
a hose portion that connects the intake head (12) and the dust separating unit (11) to each other; and
the motor module (10, 10B) according to any one of claims 1 to 13,
wherein the motor module (10, 10B) is configured to suck gas to the intake port (211) via the intake head (12), the hose portion, and the dust separating unit (11) and to discharge the gas from the exhaust port (212, 212A).
